# EUROPÄISCHE PATENTSCHRIFT

(11) **EP 0 990 683 B1**
(45) Veröffentlichungstag und Bekanntmachung des Hinweises auf die Patenterteilung: **31.03.2004**
(21) Anmeldenummer: 99115636.5
(22) Anmeldetag: 07.08.1999
(51) Int. Cl.: C09D 133/06, C09D 133/08, C09D 133/10, C09D 5/16, C09D 163/00

(54) **Verwendung einer Polyacrylat-Lösung zur Herstellung einer trockenen Grundierung auf einer feuchten Oberfläche**
Use of a polyacrylate solution for the preparation of a dry primer on a humid surface
Utilisation d'une solution de polyacrylate pour la préparation d'une première couche sur une surface mouillée

(30) Priorität: 01.10.1998 DE 19845262
(43) Veröffentlichungstag der Anmeldung: 05.04.2000
(73) Patentinhaber: Kohl, Karlheinz, 61381 Friedrichsdorf (DE)
(72) Erfinder: Kohl, Karlheinz, 61381 Friedrichsdorf (DE)
(74) Vertreter: Meyer-Dulheuer, Karl-Hermann, Dr.

(56) Entgegenhaltungen:
- DE-A- 2 726 269
- US-A- 4 503 174
- US-A- 5 021 489
- DATABASE WPI Section Ch, Derwent Publications Ltd., London, GB; Class A14, AN 1973-15757U XP002130157 & JP 48 008447 B (ASAHI GLASS CO LTD)

## Beschreibung

Gegenstand der Erfindung ist eine Harz- oder Polymerlösung, die zur Herstellung einer trockenen Grundierung auf einer feuchten Oberfläche geeignet ist.

Es ist bekannt, daß es auf Arbeitsstellen im Freien, zum Beispiel auf Baustellen häufig vorkommt, daß auf Oberflächen der verschiedensten Art ein Material aufgebracht werden muß, das zum Beispiel zum Verkleben oder zum Abdichten dient. In vielen Fällen gelingt diese Arbeit nur dann, wenn die Oberfläche trocken ist. Unter ungünstigen Witterungsbedingungen wie bei Tau, Nebel, hoher Luftfeuchtigkeit oder bei Regen ist es schwierig oder gar unmöglich, die zu bearbeitende Oberfläche ausreichend zu trocknen. Als Folgen treten dann Verzögerungen im vorgesehenen Arbeitsablauf ein, die entsprechende Kosten nach sich ziehen können.

Es stellte sich deshalb die Aufgabe, ein Verfahren zu entwickeln, mit dem eine feuchte Oberfläche so vorbehandelt wird, daß schnell und einfach eine zur weiteren Bearbeitung geeignete, trockene Oberfläche entsteht.

Mit einem einfachen Abwischen der Feuchtigkeit läßt sich dieses Ziel nicht erreichen. Wasser kann in kleinen Vertiefungen zurückbleiben und es kann auch leicht neuer Tau entstehen. Auch das Abwischen mit niedrig siedenden Lösungsmitteln, gleichgültig ob diese mit Wasser mischbar oder nicht-mischbar sind, führt vielfach nicht zu einer von Wasser völlig freien Oberfläche. Bei Verwendung von mit Wasser mischbaren Lösungsmitteln wird das Wasser zwar gut von dem Lösungsmittel aufgenommen und kann so überwiegend abgewischt werden. Direkt nach dem Abwischen verdunstet dann jedoch der verbleibende dünne Film des Lösemittels, was zu einer Abkühlung der Oberfläche und anschließend wieder zum Niederschlag einer neuen dünnen Schicht von Kondensatwasser führt. Ähnlich ist das Ergebnis bei Verwendung von mit Wasser nur wenig oder nicht-mischbaren Lösungsmitteln, bei denen zwar überraschenderweise vorübergehend eine Verdrängung des Wassers durch das Lösungsmittel beobachtet werden kann, wobei jedoch auch hier durch die Verdunstungskälte alsbald wieder ein neuer Kondensatfilm entsteht. Hinzu kommt, daß bei geneigten Oberflächen von oberhalb der behandelten Stelle leicht wieder Wasser über die getrocknete Fläche fließt, so daß eine dauerhafte Herstellung einer trockenen Oberfläche nicht möglich ist. Andere Methoden zur Herstellung trockener Oberflächen sowie das Erwärmen mit Heißluft scheiden in der Regel schon wegen des dazu notwendigen Zeitaufwandes aus.

Es sind bereits verschiedene Produkte erhältlich, die das Kleben auf feuchter Oberfläche ermöglichen sollen:

So gibt es bereits verschiedene Dichtstoffe, die zwar selbst auf feuchten Untergründen gut haften, jedoch eine lange Zeit zum Antrocknen oder Durchhärten/Durchtrocknen benötigen. In dieser Zeit stellt das aufgebrachte Material keinen Untergrund dar, der für eine weitere Verklebung geeignet ist, weil es zunächst an einer mechanischen Belastbarkeit mangelt. Denn der zunächst noch pastös-flüssige Dichtstoff gibt einfach nach, bis die durch die Verklebung einwirkende Kraft so gering wird, daß die Fließgrenze des Dichtstoffes nicht mehr überschritten wird.

Es sind auch schon selbstklebende Produkte in Form eines dünnen Films im Handel, der auf einem geeigneten Trägermaterial aufgebracht und typischerweise aufgerollt ist. Beim Andrücken des Films auf die feuchte Oberfläche und Abziehen des Trägermaterials soll eine hinreichend belastbare, trockene Oberfläche zur Verfügung stehen. Versuche zeigen jedoch, daß bei der verwendung solcher Filme in den meisten Fällen die feuchte Oberfläche zunächst gut mit einem Lappen abgewischt werden muß und auch dann wird nicht immer ein genügender Kontakt des Filmes zur Oberfläche selbst erhalten. Deshalb sind die Ergebnisse schlecht reproduzierbar und führen in mehr als der Hälfte der Fälle bereits bei geringer mechanischer Belastung zu unbefriedigenden Ergebnissen. Gleiches gilt für Produkte, bei denen der Film auf ein Material aufgebracht ist, das nach dem Andrücken der mit dem Film beschichteten Seite auf die feuchte Oberfläche als Untergrund für die weitere Verklebung dienen soll.

Wasser verdrängende Filme die mindestens zwei Polymerkomponenten und weitere Zusätze enthalten sind aus der US4503174 und der US 5021489 bekannt.

Es wurde nun gefunden, daß die genannten Probleme in überraschend einfacher Weise durch eine Harz- oder Polymerlösung gelöst werden können, die eine geringere Oberflächenspannung als Wasser und als die zu bearbeitende Oberfläche sowie eine Viskosität unter 3.000 mPa ^{·} s aufweist und bei einer Temperatur von etwa 20°C in weniger als 5 Minuten auf einer feuchten Oberfläche einen trockenen Film ausbildet. Da die Oberflächenspannung des Wassers bei 20°C bekanntlich 72,58 mN/m und die Oberflächenspannung z.B. eines Dachziegels 35 mN/m beträgt, sind erfindungsgemäß alle Harz- oder Polymerlösungen zur Herstellung einer trockenen Grundierung auf einem feuchten Dachziegel geeignet, die eine geringere Oberflächenspannung als 35 mN/m aufweisen, sofern sie den vorstehend genannten Viskositätswerten und dem Trocknungsverhalten entsprechen. Die Bestimmung der Oberflächenspannung der erfindungsgemäßen Harz- oder Polymerlösungen erfolgt gemäß DIN 53 914 "Prüfung von Tensiden, Bestimmung der Oberflächenspannung, Bügel- oder Ringmethode". Die Bestimmung der Oberflächenspannung der zu bearbeitenden Oberfläche erfolgte in Anlehnung an DIN 53 364 "Prüfung von Kunststoff-Folien, Benetzbarkeit von Polyäthylen (PE)- und Polypropylen (PP)-Folien". Dazu wurden zunächst die in der Norm aufgeführten Prüfflüssigkeiten unter Zusatz des Farbstoffes "Victoria-Blau" hergestellt und deren Oberflächenspannungen gemäß DIN 53 914 überprüft. Dann wurden zur Messung der Oberflächenspannung eines Dachziegels die Lösungen mit Pinseln auf die zuvor mit deionisiertem Wasser gereinigte und getrocknete Dachziegeloberfläche aufgestrichen und das Benetzungsverhalten optisch beurteilt. Durch Vergleich mit Prüflösungen bekannter Oberflächenspannung wurde dann die Prüflösung ermittelt, deren Film mindestens 2 Sekunden auf dem Dachziegel ausgebreitet bleibt, während die Prüflösung mit der nächstniedrigeren Oberflächenspannung sich nicht mehr ausbreitet. Dabei ergab sich für den Dachziegel eine Oberflächenspannung von 35 mN/m (dyn/cm).

Harz- oder Polymerlösungen mit einer Viskosität unter 3.000 mPa ^{·} s haben die Eigenschaft, beim Auftrag zum Beispiel mittels eines Pinsels in ausreichender Geschwindigkeit den auf der Oberfläche befindlichen Wasserfilm zu unterwandern und zu verdrängen. Bevorzugt ist dabei die Anwendung einer Harz- oder Polymerlösung, die ein in Wasser nicht-lösliches Harz oder Polymeres enthält, wobei das Lösungsmittel mit Wasser praktisch nicht mischbar sein soll. Als geeignete Harze und Polymere haben sich homopolmere oder copolymere Polyacrylate erwiesen.

Wird eine derartige Harz- oder Polymerlösung auf eine glatte Metall-, Stein- oder Kunststoffoberfläche aufgetragen, dann entsteht nach dem schnellen Verdunsten des Lösungsmittels ein fester trockener Film auf der zu behandelnden Oberfläche, der für die weitere Bearbeitung gut geeignet ist. Dabei ist es auch vorteilhaft, daß während der verdunstung sich über der Filmoberfläche eine Schicht von Lösungsmitteldämpfen ausbildet, welche die feuchte Luft verdrängt und damit die Ausbildung eines feuchten Kondensatfilms auf der frisch gebildeten, trockenen Oberfläche verhindert. Auf der vor der Behandlung feuchten Oberfläche kann dann schon nach wenigen Minuten auf der frisch gebildeten trockenen Grundierung weitergearbeitet werden. Der Auftrag der erfindungsgemäßen Harz- oder Polymerlösung auf die Oberfläche erfolgt beispielsweise mittels eines Pinsels oder einer anderen geeigneten Auftragungsvorrichtung. Dabei wird der Feuchtigkeitsfilm von der Harz- oder Polymerlösung unterwandert und verdrängt und zum Teil auch bei der Verdunstung des Lösungsmittels mitgerissen.

Das der vorliegenden Erfindung zugrundeliegende Prinzip der Unterwanderung und Unterdrängung eines Wasserfilms auf einer festen, nicht porösen und nicht saugenden Oberfläche durch eine Lösung eines Harzes oder eines Polymeren in einem mit Wasser überwiegend nicht mischbaren Lösungsmittel kann in vielfältiger Weise angewendet werden. So ist es zum Beispiel mit diesem Verfahren gelungen, auf feuchte Dachziegel ein in leicht flüchtigen Kohlenwasserstoffen gelöstes Polyacrylat aufzutragen, durch das schon in wenigen Minuten eine trockene Grundierung geschaffen werden konnte, auf der eine mit Butylkautschuk zu verklebende Abdichtungsfolie sauber und dauerhaft haften konnte. Entscheidend für die Eignung der erfindungsgemäßen Harz- oder Polymerlösung ist dabei vor allem, daß sie eine geringere Oberflächenspannung als Wasser und als die zu bearbeitende Oberfläche sowie eine viskosität unter 3.000 mPa ^{·} s aufweist. Selbstverständlich werden mit der erfindungsgemäßen Harz- oder Polymerlösung auch andere glatte Oberflächen schnell von einem Feuchtigkeitsfilm befreit, so daß sie für eine Weiterbehandlung bereit sind. Beispielsweise können andere, aus Stein bestehende Bauelemente, zum Beispiel Schornsteine, um deren äußere Wandung ein Dichtungsring gelegt werden soll, zunächst an den zu bearbeitenden Stellen durch die Schaffung einer erfindungsgemäßen Grundierung trockengelegt werden, was Voraussetzung für die weitere Bearbeitung ist. Auch die Trocknung eines Metallkörpers, z. B. eines Schiffsrumpfes vor dem Auftragen eines Anstriches kann durch eine Vorbehandlung mit der erfindungsgemäßen Harz- oder Polymerlösung mit gutem Erfolg durchgeführt werden.

Es ist zu beachten, daß der mit der vorliegenden Erfindung erreichte Effekt einer verdrängung des Wasserfilms auf glatten Oberflächen in dauerhafter Weise nur durch die erfindungsgemäße Harz- oder Polymerlösung erreicht wird. Würde man das Lösungsmittel allein, zum Beispiel Benzin, zur Verdrängung oder unterwanderung des Wasserfilms verwenden, wozu es aufgrund seiner geringeren Oberflächenspannung als Wasser an sich geeignet sein könnte, dann würde eine stark abgekühlte Oberfläche zurückbleiben, auf der sich erneut ein Feuchtigkeitsfilm schnell niederschlagen würde. Durch die Anwendung der erfindungsgemäßen Harz- oder Polymerlösung tritt keine schlagartige Verdunstung des Lösungsmittels und damit auch keine sofortige, starke Abkühlung der behandelten Oberfläche ein. Dadurch wird die Bildung eines Niederschlages von Feuchtigkeit auf dem trocknenden Film der erfindungsgemäßen Harz- oder Polymerlösung unterbunden. Hinzukommt, daß die entstandene Grundierung am Rand der behandelten Oberfläche eine Art "Schutzwall" gegen das Eindringen von Wasser bildet, das sonst, insbesondere auf geeigneten Oberflächen leicht in den gerade getrockneten Bereich einfließen würde.

Die erfindungsgemäße Harz- oder Polymerlösung kann für die praktische Anwendung in einer gebrauchsfertigen verpackung angeboten werden, die ihren unmittelbaren Einsatz an der Arbeits- oder Baustelle ermöglicht. Im einfachsten Fall befindet sich die Harz- oder Polymerlösung in einer Dose oder Flasche und wird mit einem Pinsel auf die zu behandelnde Fläche aufgetragen. vorteilhafter ist es allerdings, gleich eine "Pinseldose" zu verwenden, bei der der Pinsel auf der Innenseite in den Deckel der Dose integriert ist und dort auch nicht austrocknen kann, da er beim Zuschrauben der Dose wieder in die Lösung taucht. Natürlich kann die erfindungsgemäße Harz- oder Polymerlösung auch als Spray verwendet werden.

Ganz besonders vorteilhaft ist es aber, die Harz- oder Polymerlösung in einer Flasche oder Tube mit einem ggf. extra anzuschraubenden Verschluß anzubieten, der einen Pinsel oder einen Filz oder einen Schwamm enthält, wobei dann die Harzoder Polymerlösung beim Umdrehen der Flasche langsam durch den Pinsel, den Filz oder den Schwamm sickert und so einen gleichmäßigen dünnen Auftrag ermöglicht. Besonders vorteilhaft ist es dabei, den Verschluß so zu konstruieren, daß erst bei ausreichendem Druck des Pinsels, des Filzes oder des Schwammes auf die zu behandelnde Oberfläche das flüssige Gut aus der Flasche heraus und durch den Pinsel, Filz oder Schwamm hindurchlaufen kann und beim Absetzen von der Oberfläche sich der Verschluß selbsttätig wieder schließt.

Handelt es sich nur um eine Vorbehandlung kleiner Oberflächen, kann auch mit einem Filzstift eine trockene Grundierung mit Hilfe der erfindungsgemäßen Harz- oder Polymerlösung erzeugt werden. In jedem Fall sollte jedoch eine Verpackung verwendet werden, die leicht zu handhaben ist und die Möglichkeit bietet, ohne zusätzliches Arbeitsgerät einen gleichmäßig dünnen Film aufzutragen.

## Patentansprüche

1. Verwendung einer Polyacrylat-Lösung bestehend aus einem in Wasser nicht löslichen homopolymeren oder copolymeren Polyacrylat und einem leicht flüchtigen Kohlenwasserstoff als einem mit Wasser praktisch nicht mischbaren Lösungsmittel, wobei die Polyacrylat-Lösung eine eine Viskosität unter 3.000 mPa x· s aufweist und bei einer Temperatur von etwa 20°C in weniger als 5 min eine trockene Oberfläche ausbildet, **dadurch gekennzeichnet, dass** die Polyacrylat-Lösung zur Herstellung eines trockenen Films auf einer feuchten Oberfläche eingesetzt wird.

2. Verwendung nach Anspruch 1, **dadurch gekennzeichnet, dass** die Polyacrylat-Lösung zur Herstellung eines trockenen Films auf feuchten Dachziegeln eingesetzt wird.

3. Verwendung nach den Ansprüchen 1 und 2, **dadurch gekennzeichnet, dass** die Polyacrylat-Lösung in einem Gefäß enthalten ist, dessen Verschluss mit einer Einrichtung zum Bestreichen der Oberfläche ausgerüstet ist, die von der aus dem Gefäß nachsickernden Polyacrylat-Lösung ständig befeuchtet wird.

## Claims

1. Use of a polyacrylate solution consisting of a water-insoluble homopolymeric or copolymeric polyacrylate and a highly volatile hydrocarbon as a virtually water-immiscible solvent, the polyacrylate solution having a viscosity of less than 3 000 mPa·s and forming a dry surface in less than 5 min at a temperature of about 20°C, **characterized in that** the polyacrylate solution is used to produce a dry film on a humid surface.

2. Use according to Claim 1, **characterized in that** the polyacrylate solution is used to produce a dry film on humid roof tiles.

3. Use according to Claims 1 and 2, **characterized in that** the polyacrylate solution is in a vessel whose closure is provided with a surface-coating means which is constantly wetted by the polyacrylate solution seeping from the vessel.

## Revendications

1. Utilisation d'une solution de polyacrylate constituée d'un polyacrylate homopolymère ou copolymère non soluble dans l'eau et d'un hydrocarbure aisément volatil en tant qu'un solvant pratiquement non miscible à l'eau, la solution de polyacrylate ayant une viscosité inférieure à 3 000 mPa.s et formant, à une température d'environ 20°C, une surface sèche en moins de 5 minutes, **caractérisée en ce que** la solution de polyacrylate est utilisée pour la production d'un film sec sur une surface humide.

2. Utilisation selon la revendication 1, **caractérisée en ce que** la solution de polyacrylate est utilisée pour la production d'un film sec sur des tuiles humides.

3. Utilisation selon les revendications 1 et 2, **caractérisée en ce que** la solution de polyacrylate est contenue dans un récipient dont la fermeture est munie d'un dispositif pour l'enduction de la surface qui est humectée de façon ininterrompue par la solution de polyacrylate s'écoulant très lentement du récipient.
